# EUROPÄISCHE PATENTSCHRIFT

(11) **EP 3 112 948 B1**
(45) Veröffentlichungstag und Bekanntmachung des Hinweises auf die Patenterteilung: **22.04.2020**
(21) Anmeldenummer: 16181035.3
(22) Anmeldetag: 31.10.2008
(51) Int. Cl.: G03H 1/20, G03H 1/22, G06K 19/16, G07D 7/12

(54) **VERFAHREN UND VORRICHTUNG ZUR VERIFIZIERUNG VON HOLOGRAMMEN MIT WASSERZEICHENARTIGER STRUKTUR**
METHOD AND DEVICE FOR VERIFYING HOLOGRAMS WITH WATERMARK-LIKE STRUCTURE
PROCEDE ET DISPOSITIF DE VERIFICATION D'HOLOGRAMMES COMPRENANT UNE STRUCTURE SIMILAIRE À UN FILIGRANE

(30) Priorität: 31.10.2007 DE 102007052952
(43) Veröffentlichungstag der Anmeldung: 04.01.2017
(62) Teilanmeldung aus: 08845505.0
(73) Patentinhaber: Bundesdruckerei GmbH, 10969 Berlin (DE)
(72) Erfinder: Leopold, André, 10119 Berlin (DE)
(74) Vertreter: Patentanwälte Bressel und Partner mbB

(56) Entgegenhaltungen:
- DE-U1- 29 819 954
- US-A1- 2005 129 282
- SCHILLING A ET AL: "Achromatic features for optically variable devices", PROCEEDINGS OF THE SPIE - THE INTERNATIONAL SOCIETY FOR OPTICAL ENGINEERING SPIE-INT. SOC. OPT. ENG USA, Bd. 4677, 2002, Seiten 238-246, XP002515545, ISSN: 0277-786X
- "The MasterCard Card Security Features and Optional Card Features", , 2008, XP055235907, Gefunden im Internet: URL:https://www.mastercard.com/ca/wce/PDF/ Final_May_27_08_Lay_By_Card.pdf [gefunden am 2015-12-11]
- "MasterCard Card Identification Features", , 2005, XP055297501, Gefunden im Internet: URL:https://www.mastercard.com/uk/merchant /en/downloads/10862_MasterCard_Card_Identi fication_Features.pdf [gefunden am 2016-08-24]

## Beschreibung

Die Erfindung betrifft ein Verfahren und eine Vorrichtung zur Verifizierung von Hologrammen und Sicherheitsdokumenten mit Hologrammen als Sicherheitselementen.

Als Sicherheitsdokumente werden alle Dokumente betrachtet, die gegen ein unbefugtes Kopieren und oder Fälschen geschützt werden sollen. Sicherheitsdokumente umfassen somit alle Arten von Identifikationsdokumenten, wie beispielsweise Reisepässe, Personalausweise, Identitätskarten, Führerscheine usw., Wertdokumente, aber beispielsweise auch Verpackungen beispielsweise von Medikamenten usw.

Sicherheitselemente dienen dazu, eine Echtheitsprüfung von Sicherheitsdokumenten zu ermöglichen. Eine Art von Sicherheitselementen stellen Hologramme dar. In Sicherheitselementen sind oftmals auch individualisierende Angaben enthalten. Bei Sicherheitselementen für oder von Identitätsdokumenten umfassen diese Angabe beispielsweise eine Seriennummer, eine Ausweisnummer, biometrische Daten, Bilder (Passbilder), etc. Diese können in Klarschrift bzw. Bildform oder optisch codiert bzw. maschinenlesbar vorgesehen sein.

Das grundsätzliche Vorgehen bei der Herstellung von individuellen Volumenhologrammen ist beispielsweise in der Literaturstelle EP 0 896 260 A2 beschrieben. Die Grundzüge werden folgend kurz erläutert. Zunächst wird ein Hologrammmaster mit einem Masterhologramm hergestellt. Dann wird der Hologrammmaster hinter ein holografisches Aufzeichnungsmaterial positioniert. Kohärentes Licht, beispielsweise aus einem Laser, wird auf die dem Hologrammmaster abgewandte Seite des holografischen Aufzeichnungsmaterials eingestrahlt, typischerweise mit definierter Wellenlänge und definiertem Inzidenzwinkel, nach Maßgabe des vom Hologrammmaster zu rekonstruierenden holografischen Musters. Es durchdringt das holografische Aufzeichnungsmaterial und wird vom Hologrammmaster gebeugt bzw. reflektiert, womit das Hologramm durch Interferenz mit dem einfallenden Licht erzeugt wird und sich das Hologramm in dem holografischen Aufzeichnungsmaterial abbildet und durch photochemische- oder photophysikalische Prozesse im holografischen Aufzeichnungsmaterial speichert. Dabei kann der Hologrammmaster so ausgelegt sein, dass er für mehrere Wellenlängen empfindlich ist und diese entsprechend beugt. Auch andere als die beschriebene Anordnung können verwendet werden, um Hologramme herzustellen.

Um Hologramme zu individualisieren, kann das kohärente Licht durch einen Spatial Light Modulator moduliert werden. Hierdurch wird dem Hologramm ein Individualisierungsmuster aufgeprägt. Aus der Praxis sind digitale Projektoren bekannt, welche mit Spatial Light Modulatoren in Form von Liquid Crystal Displays (LCD) arbeiten. Die Funktionsweise entspricht beispielsweise der Projektion eines Dias, wobei der Spatial Light Modulator anstelle des Dias tritt.

Aus der Praxis sind des Weiteren digitale Projektoren bekannt, welche ein DMD (Digital Micro Mirror Device) als Spatial Light Modulator umfassen. Aus der Literaturstelle DE 2005 054 396 A1 ist der Einsatz eines Spatial Light Modulators in Form eines Digital Micro Mirror Device (DMD) zur Markierung von Gegenständen bekannt.

Bei dem in EP 0 896 260 A2 beschriebenen Verfahren wird als Hologrammmaster für eine Individualisierungsvorlage ein Hologramm einer Mattscheibe verwendet, welches auch als Masterhologramm bezeichnet ist. Das Hologramm besitzt die Eigenart, bei der Rekonstruktion, das heißt beim Kontaktkopieren des Masterhologramms, bei dem es unter dem Referenzwinkel (der auch als Belichtungseinfallwinkel bezeichnet wird) beleuchtet wird, auftreffendes Licht nicht nur in genau eine Richtung unter einem Belichtungsausfallwinkel zu beugen oder zu reflektieren, sondern in einen Winkelbereich um den Belichtungsausfallwinkel. Die Mattscheibe und somit das von ihr angefertigte Masterhologramm weisen eine Streucharakteristik auf, die durch die Größe des Winkelbereichs in den das einfallende Licht gestreut wird, gekennzeichnet ist. Ein Hologramm, welches mit einem solchen "Mattscheiben"- Masterhologramm gemäß oben beschriebenen Kontaktkopierverfahren hergestellt ist, weist diese Eigenschaft ebenfalls auf, dass es gegenüber Abweichungen von einer optimalen Rekonstruktionsgeometrie "toleranter" ist. Beachtet man, dass eine typische Schichtdicke eines holografischen Aufzeichnungsmaterials etwa 10 µm beträgt, so ergibt es sich, dass sich solche Hologramme insbesondere für einen Einsatz auf rauen Substraten, beispielsweise Papiersubstraten mit einem Wasserzeichen eignen, da Papier im Bereich eines Wasserzeichens eine größere Rauigkeit als in den übrigen Bereichen aufweist. Dieses hat seine Ursache in dem Herstellungsprozess von Wasserzeichen in Papier.

Wasserzeichen werden durch Strukturen hergestellt, welche sich in einem Sieb befinden, mit welchem der Papierbrei aus dem Wasser geschöpft wird. An Stellen, an denen das Sieb erhaben ist, sammeln sich weniger Fasern als an jenen Stellen, an welchen das Sieb Vertiefungen aufweist. Dort sammeln sich mehr Fasern. An den Stellen, an denen sich weniger Fasern befinden, ist das Papier durchsichtiger als an jenen Stellen, an denen sich mehr Fasern gesammelt haben. Im Durchlicht ist das Wasserzeichen ohne technische Hilfsmittel auch für einen Laien gut zu erkennen. Moderne Papiermühlen sind in der Lage, Muster, Schriftzeichen und andere grafische Darstellungen in unterschiedlichen Grautönen darzustellen.

In Schilling et al., "Achromatic Features for Optically Variable Devices", Proc. of SPIE Vol. 4677, 238 (2002) werden achromatische Eigenschaften von optisch variablen Merkmalen (OVDs) beschrieben. Zum Hervorrufen der achromatischen Eigenschaften werden matte Strukturen geschaffen, deren Oberflächenstrukturen mittels statistisch variierender Parameter hergestellt wurden und deshalb unter Weißlicht weiß oder grau erscheinen. In einer beschriebenen Ausführungsform werden die matten Strukturen in Kinegrammen eingesetzt.

Aus der DE 298 19 954 U1 ist eine Vorrichtung zum optischen Prüfen von Hologrammen oder Kinegrammen bekannt. Die Vorrichtung weist eine Halterung für den das Hologramm aufweisenden Träger, eine Kamera zum Aufnehmen zumindest des an dem Hologramm gebeugten Lichts und wenigstens eine Beleuchtungseinrichtung zum Beleuchten des Hologramms auf.

Aus der US 2005/0129282 A1 ist ein Verfahren zum Überprüfen einer Kreditkarte bekannt. Hierbei werden mindestens zwei Abbildungen von Rekonstruktionen eines auf der Kreditkarte angebrachten Hologramms aus unterschiedlichen Betrachtungswinkeln erfasst und daraus abgeleitete Eigenschaften mit Referenzen verglichen, so dass eine Authentizität des Hologramms festgestellt werden kann. Es werden ferner die vier letzten Stellen der in die Kreditkarte eingeprägten Kreditkartennummer optisch erfasst und mit der auf dem Magnetstreifen der Kreditkarte abgespeicherten Kreditkartennummer abgeglichen.

Im Internet konnte unter der URL:https;//www.mastercard.com/ca/wce/PDF/Final May 27 08 Lay By Card.pdf am 11. Dezember 2015 ein Dokument mit dem Titel "The MasterCard Card Security Features and Optional Card Features abgerufen werden, welches eine Kreditkarte mit einem Hologramm als Sicherheitsmerkmal beschreibt.

Unter der URL:https;//www.mastercard.com/uk/merchant/en/downloads/10862 MasterCard Card Identification Features.pdf konnte am 24. August 2016 ein Dokument mit dem Titel "MasterCard Card Identification Features" abgerufen werden, in dem ebenfalls holografische Sicherheitsmerkmale für eine Kreditkarte beschrieben sind.

Moderne Sicherheitsdokumente, wie Reisepässe, Verpackungen oder Echtheitszertifikate von Software, umfassen heute bereits Hologramme als Sicherheitselemente. Reisepässe und Personalausweise umfassen darüber hinaus häufig ein Hologramm, welches mit einem das Passbild darstellenden Individualisierungsmuster individualisiert ist. Bei einer fortschreitenden Verbreitung der technischen Geräte, die zur Herstellung von Hologrammen, insbesondere von individualisierten Hologrammen, benötigten werden, ist zu befürchten, dass Dokumentenfälscher einfache Hologramme nachahmen oder herstellen können. Benötigt werden somit Hologramme, deren Erzeugungsaufwand für Fälscher erhöht ist, wobei der erhöhte Aufwand zu mindestens einem zusätzlichen einfach zu verifizierenden Merkmal des Hologramms führen sollte.

Zur Verbesserung werden ein Herstellungsverfahren sowie eine Vorrichtung zum Herstellen von Hologrammen sowie solche Hologramme und Sicherheitsdokumente selbst und ein Verfahren zum Herstellen solcher Sicherheitsdokumente mit einem Hologramm als Sicherheitselement beschrieben, bei denen das Hologramm gegenüber den bekannten Hologrammen schwieriger durch Fälscher herzustellen ist und dennoch eine zuverlässige Verifikation und auch eine Großserienfertigung von Hologrammen, insbesondere individualisierten Hologrammen möglich ist.

Der Erfindung liegt somit die technische Aufgabe zugrunde, ein Verfahren und eine Vorrichtung zur Verifikation zu schaffen, mit denen solche verbesserten Hologramme bzw. mit solchen Hologrammen versehene Sicherheitsdokumente leicht auf ihre Echtheit geprüft werden können.

### Definitionen

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheitsdokument, welches auch ein Wertdokument sein kann, verbunden, beispielsweise verklebt, werden kann. Es kann sich aber auch um einen integralen Bestandteil eines Sicherheitsdokumentes handeln. Ein Beispiel für Erstes ist ein auf ein Sicherheitsdokument aufklebbares Visum. Ein Beispiel für Letzteres ist ein in einen Geldschein oder einen Ausweis integriertes, beispielsweise einlaminiertes Hologramm.

Ein Sicherheitsmerkmal ist eine Struktur, die nur mit (gegenüber einfachem Kopieren) erhöhtem Aufwand oder gar nicht unautorisiert herstellbar bzw. reproduzierbar ist.

Ein Muster besteht typischerweise aus einer Vielzahl nebeneinander angeordneter Mustereinheiten bzw. Pixel. Die Mustereinheiten bzw. Pixel eines Musters sind einander zugeordnet und in definierter Weise lateral zueinander angeordnet, typischerweise in ein oder zwei Raumdimensionen, und ergeben in der Gesamtbetrachtung eine Darstellung, beispielsweise ein Bild, ein Symbol, ein Logo, einen Schriftzug (Buchstaben, Zahlen, alphanumerisch) oder einen Code (z.B. einen Barcode). Ein Individualisierungsmuster ist ein Muster, welches zur Individualisierung verwendet wird.

Als Sicherheitsdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Wertdokumente, wie Banknoten, Schecks, Postwertzeichen, Kreditkarten, beliebige Chipkarten und Haftetiketten (z.B. zur Produktsicherung). Solche Sicherheitsdokumente weisen typischerweise ein Substrat, eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder Kunststoffbasis in Frage. Ein Substrat wird auch genutzt, um hierauf ein Hologramm als Sicherheitselement auf- oder anzubringen.

Ein Spatial Light Modulator (SLM) erlaubt eine zweidimensional ortsaufgelöste Beleuchtung bzw. Bestrahlung eines meist flächigen Gegenstandes mit modulierter Intensität. Hierbei kann es sich beispielsweise um einen DMD (Digital Micro Mirror Device) Chip, ein LCD (Liquid Crystal Display) Transmissionsdisplay oder ein LCoS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Muster oder Bilder projizieren lassen. Durch die freie Ansteuerbarkeit können auch ohne weiteres verschiedene Bilder oder Muster in zeitlicher Folge hintereinander generiert werden, beispielsweise in Form eines Passfotos.

Ein Code bzw. Muster ist individualisierend, wenn er einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Ein für eine Gruppe von Geldscheinen innerhalb der Gesamtmenge der Geldscheine individualisierender Code ist die Wertigkeit. Für einen Geldschein individualisierend ist die Seriennummer. Beispiele für nicht individualisierende Codes bzw. Muster sind Wappen, Siegel, Hoheitszeichen, etc.

Ein holografisches Aufzeichnungsmaterial ist eine Schicht aus einem Material, welches photosensitiv ist, und in welcher sich Holografien durch irreversible, aber auch reversible photochemische und/oder photophysikalische Prozesse im Wege der Belichtung speichern lassen. Lediglich beispielhaft seien die in der Holografie oft verwendeten Photopolymere genannt.

Unter dem Begriff Rekonstruktionsgeometrie wird allgemein eine Geometrie verstanden, die zum Rekonstruieren eines Hologramms verwendet wird. Diese ist durch einen Einfallwinkel des zur Beleuchtung genutzten Lichts und einen Ausfallwinkel, unter dem das Hologramm betrachtet wird, gekennzeichnet. Beide Winkel können unabhängig von einander variiert werden, um eine Rekonstruktionsgeometrie zu verändern. Eine optimale Rekonstruktionsgeometrie ist jene Geometrie, bei der das Hologramm optimal rekonstruiert wird.

Ein Belichtungseinfallwinkel ist der Winkel, unter dem ein Masterhologramm bei einem Kontaktkopiervorgang belichtet wird, um dieses optimal zu rekonstruieren. Der Winkel, unter dem die Rekonstruktion optimal zu beobachten ist, wird als Belichtungsausfallwinkel bezeichnet. Der Wortbestanteil "Belichtungs-" soll andeuten, dass die Rekonstruktion während der Belichtung eines bei dem Kontaktkopiervorgang erzeugten Hologramms erfolgt. Bei einem solchen fertig gestellten Hologramm wird der Winkel, unter dem das Hologramm für eine Rekonstruktion optimal beleuchtet wird, als Rekonstruktionseinfallwinkel bezeichnet, der Winkel unter dem das Hologramm optimal betrachtet werden kann, wird entsprechend als Rekonstruktionsausfallwinkel bezeichnet. Eine Rekonstruktionsgeometrie, bei der die Beleuchtung unter dem Rekonstruktionseinfallwinkel erfolgt und die Betrachtung unter dem Rekonstruktionsausfallwinkel vorgenommen wird, ist somit die optimale Rekonstruktionsgeometrie. Einfallwinkel und Ausfallwinkel, die bei einer Rekonstruktion verwendet werden, jedoch nicht die optimale Rekonstruktionsgeometrie kennzeichnen, werden hier nicht als Rekonstruktionseinfallwinkel oder Rekonstruktionsausfallwinkel bezeichnet.

### Grundzüge der Erfindung und bevorzugte Ausführungsformen

Die Erfindung stellt eine Verifizierungsvorrichtung für ein Hologramm oder ein Sicherheitsdokument mit einem Hologramm gemäß Anspruch 1 und ein Verfahren zur Verifizierung der Echtheit eines Hologramms oder eines Sicherheitsdokuments mit einem Hologramm gemäß Anspruch 6 zur Verfügung. Bevorzugte Ausführungsformen werden in den jeweiligen abhängigen Ansprüchen definiert.

Eine erfindungsgemäße Verifizierung wird nach einem Verfahren mit folgenden Schritten ausgeführt: Erfassen einer Rekonstruktion des Hologramms unter mindestens zwei vorgegebenen Rekonstruktionsgeometrien, die an die Winkelbereiche der Streucharakteristiken der mindestens zwei Regionen angepasst sind, und Auswerten von Unterschieden der erfassten Rekonstruktionen und Vergleichen der Unterschiede mit vorgegebenen Unterschieden, Treffen einer Verifikationsentscheidung anhand des Vergleichsergebnisses und Ausgeben der Verifikationsentscheidung. Unter angepasst an die Winkelbereiche der Streucharakteristiken bedeutet, dass die die vorgegebenen Rekonstruktionsgeometrien festlegenden Winkel so gewählt sind, dass sich deutliche Unterschiede in den Rekonstruktionen zeigen, die auf die unterschiedlichen Streucharakteristiken bzw. Winkelbereiche der mindestens zwei Regionen zurückzuführen sind. Eine bevorzugte Vorrichtung zur automatisierten Verifizierung eines solchen Hologramms oder eines Sicherheitsdokuments mit einem solchen Hologramm umfasst daher mindestens eine Lichtquelle, die Licht der Wellenlänge erzeugt, mit welchem das Hologramm belichtet ist, und eine Erfassungseinrichtung zum Erfassen einer Rekonstruktion des Hologramms, wobei eine Beleuchtung und Erfassung unter mindestens zwei voneinander abweichenden vorgegebenen Rekonstruktionsgeometrien ausführbar ist, und die Erfassungseinrichtung mit einer Auswerteeinheit gekoppelt ist, die Unterschiede der Rekonstruktionen mit vorgegebenen erwarteten Unterschieden vergleicht und eine Ausgabeeinrichtung zum Ausgeben des Vergleichsergebnisses umfasst. Erfindungsgemäß ist vorgesehen, dass eine Rekonstruktion des Hologramms unter einer ausgezeichneten Rekonstruktionsgeometrie erfasst wird, unter der die mindestens zwei Regionen in der Rekonstruktion als gleich hell oder gleich intensiv wahrgenommen werden, um aus dieser Rekonstruktion ein sich zumindest über Teile der beiden Regionen erstreckendes Individualisierungsmuster zu extrahieren, und dass mit der Auswerteeinheit eine weitere Erfassungseinheit gekoppelt ist, um ein zusätzliches Merkmal des Hologramms oder Sicherheitsdokuments zu erfassen und die Auswerteeinheit ausgebildet ist, das Individualisierungsmuster gegen das zusätzliche Merkmal abzugleichen.

Während unter der optimalen Rekonstruktionsgeometrie beide Regionen rekonstruieren, existiert mindestens eine Rekonstruktionsgeometrie, unter der nur eine stärker streuende der mindestens zwei Regionen rekonstruiert, d.h., wahrnehmbar ist. Die Verifizierung kann jedoch auch auf einfache Weise durch Kontrollpersonal ausgeführt werden. Da der beschriebene Effekt von einer geeigneten Betrachtung ähnlich wie bei einem Wasserzeichen in einem Papier abhängt, wird dieser Effekt auch als wasserzeichenartiger Effekt bezeichnet und die sich ergebende Struktur im hergestellten Hologramm als wasserzeichenartige Struktur. Gegenüber Hologrammen, die unter verschiedenen Winkeln mehrfach belichtet sind, bei denen sich auch Veränderungen ähnlicher Art erzielen lassen, kann ein solches Hologramm sehr viel einfacher hergestellt werden.

In einer vorteilhaften Ausführungsform ist vorgesehen, dass die Verifizierungsvorrichtung zusätzlich mehrere Lichtquellen umfasst, die Licht der Wellenlänge oder Wellenlängen erzeugen, für die das Hologramm belichtet ist, und so angeordnet sind, dass die mindestens eine Lichtquelle und die mehreren Lichtquellen das Hologramm unter unterschiedlichen Winkeln zeitversetzt beleuchten können.

In einer weiteren vorteilhaften Ausführungsform ist vorgesehen, dass die mindestens eine Lichtquelle und die Erfassungseinheit relativ zueinander schwenkbar sind, um die Rekonstruktionsgeometrie variieren zu können.

Bei einer weiteren vorteilhaften Ausführungsform ist vorgesehen, dass die Erfassungseinheit die Rekonstruktionen ortsaufgelöst nach Helligkeits- oder Intensitätswerten erfassen kann. In einer weiteren Ausführungsform ist vorteilhafterweise vorgesehen, dass die Auswerteeinheit eine Kontrastumkehr der mindestens zwei Regionen in unter den mindestens zwei Rekonstruktionsgeometrien aufgenommenen Rekonstruktionen als Verifikationskriterium auswertet.

In einer vorteilhaften Ausführungsform des Verfahrens zum Verifizieren ist vorgesehen, dass das Hologramm zeitversetzt unter unterschiedlichen Winkeln beleuchtet wird, um die Rekonstruktionen unter den mindestens zwei Rekonstruktionsgeometrien aufzunehmen.

Ferner ist in einer weiteren vorteilhaften Ausführungsform hierbei vorgesehen, dass die mindestens eine Lichtquelle und die Erfassungseinheit relativ zueinander geschwenkt werden, um die Rekonstruktionen unter den mindestens zwei Rekonstruktionsgeometrien aufzunehmen.

In einer weiteren vorteilhaften Ausführungsform ist vorgesehen, dass die Rekonstruktionen ortsaufgelöst nach Helligkeits- oder Intensitätswerten erfasst werden.

Ferner ist in einer weiteren vorteilhaften Ausführungsform vorgesehen, dass die Auswerteeinheit eine Kontrastumkehr der mindestens zwei Regionen in unter den mindestens zwei Rekonstruktionsgeometrien aufgenommenen Rekonstruktionen als vorgegebenen Unterschied auswertet.

Insbesondere ist in einer vorteilhaften Ausführungsform vorgesehen, dass eine Rekonstruktion des Hologramm unter einer ausgezeichneten Rekonstruktionsgeometrie erfasst wird, unter der die mindestens zwei Regionen in der Rekonstruktion als gleich hell oder gleich intensiv wahrgenommen werden, und ein sich zumindest über Teile der beiden Regionen erstreckendes Individualisierungsmuster erfasst wird und ein zusätzliches Merkmal des Hologramms oder Sicherheitsdokuments erfasst wird und das Individualisierungsmuster gegen das zusätzliche Merkmal abgleichen wird.

Das Verfahren und die Vorrichtung zur Verifizierung eignen sich besonders für Hologramme, welche mittels des nachfolgend beschriebenen Verfahrens hergestellt wurden, wobei das Verfahren die Schritte umfasst: Bereitstellen eines Hologrammmasters; Anordnen eines holografischen Aufzeichnungsmaterials vor dem Hologrammmaster; Erzeugen kohärenten Lichts und Durchstrahlen des holografischen Aufzeichnungsmaterials mit dem kohärenten Licht, so dass ein Teil des Lichts an dem in Ausbreitungsrichtung des kohärenten Lichts hinter dem holografischen Aufzeichnungsmaterial angeordneten Hologrammmaster in das holografische Aufzeichnungsmaterial zurückreflektiert oder gebeugt wird, um mit dem das holografische Aufzeichnungsmaterial durchstrahlenden kohärenten Licht zu interferieren und so das Hologramm in das Aufzeichnungsmaterial zu belichten, wobei der Hologrammmaster mit mindestens zwei Regionen unterschiedlicher Streucharakteristik bereitgestellt und/oder erzeugt wird, die jeweils unter einem gleichen Belichtungseinfallwinkel einfallendes monochromatisches kohärentes Licht abhängig von ihrer Streucharakteristik in unterschiedlich große begrenzte Winkelbereiche um denselben Belichtungsausfallwinkel reflektieren und/oder beugen. Diese Streucharakteristiken der beiden Regionen des Hologrammmasters übertragen sich auf das hergestellte Hologramm. Dieses weist somit mindestens zwei Regionen auf, die hinsichtlich ihrer Winkelabhängigkeit oder Winkeltoleranz gegenüber einer optimalen Rekonstruktion voneinander unterscheiden, jedoch optimal unter derselben Rekonstruktionsgeometrie (der optimalen Rekonstruktionsgeometrie) rekonstruierbar sind.

Eine Vorrichtung zur Herstellung eines solchen Hologramms umfasst einen Hologrammmaster, eine Aufnahme und/oder Führung für ein holografisches Aufzeichnungsmaterial und eine Lichtquelle, die kohärentes Licht emittiert, sowie eine Abbildungsoptik zum Führen des kohärenten Lichts, um das holografische Aufzeichnungsmaterial mit dem kohärenten Licht zu durchstrahlen, so dass zumindest ein Teil des kohärenten Lichts an dem Hologrammmaster gebeugt und/oder reflektiert wird, um mit dem das holografische Aufzeichnungsmaterial durchstrahlenden kohärenten Licht in dem holografischen Aufzeichnungsmaterial zu interferieren, wobei der Hologrammmaster mindestens zwei Regionen unterschiedlicher Streucharakteristik umfasst, die jeweils unter einem gleichen Belichtungseinfallwinkel einfallendes kohärentes Licht abhängig von ihrer Streucharakteristik in unterschiedlich große begrenzte Belichtungsausfallwinkelbereiche um denselben Belichtungsausfallwinkel reflektieren und/oder beugen. Es ergibt sich ein Hologramm mit wasserzeichenartiger Struktur, welches unter einem Rekonstruktionseinfallwinkel einfallendes Licht bei einer Rekonstruktion in einen Rekonstruktionsausfallwinkel reflektiert und/oder beugt, wobei das Hologramm mindestens zwei Regionen umfasst, die aus unterschiedlich großen Winkelbereichen um den Rekonstruktionseinfallwinkel einfallendes Licht in entsprechende unterschiedlich große Winkelbereiche um den Rekonstruktionsausfallwinkel reflektieren.

Ein Sicherheitsdokument umfasst dann ein solches Hologramm. Es wird mit einem Verfahren hergestellt, welches die Schritte zum Herstellen eines Hologramms und zusätzlich den Schritt umfasst, das Hologramm auf einem Substrat anzubringen oder aufzubringen, d.h., das Hologramm in das Sicherheitsdokument zu integrieren. Obwohl eine hohe Wellenlängenselektivität erhalten bleibt, existieren für das sich ergebende Hologramm verschiedene Rekonstruktionsgeometrien, die unterschiedliche Resultate ergeben.

Korrespondierend mit den vorgenannten Ausführungsformen der Verifikationsvorrichtung und des Verfahrens zur Verifizierung weisen das Verfahren zum Herstellen des Hologramms und die Vorrichtung zum Herstellen des Hologramms bzw. das Hologramm und das Sicherheitsdokument folgende Merkmale auf:
Bei einer bevorzugten Ausführungsform ist der Hologrammmaster ein Hologramm, bevorzugt ein Volumenhologramm und am bevorzugtesten ein Reflexions-Volumenhologramm.

Um ein einfaches Masterhologramm nutzen zu können, welches nur für eine Wellenlänge selektiv ist und mit dem eine höhere Beugungseffizienz zu erreichen ist, ist auch eine Beleuchtung mit monochromatischem Licht dieser Wellenlänge vorteilhaft. Bei einer bevorzugten Ausführungsform ist daher vorgesehen, dass das Licht monochromatisch erzeugt wird oder monochromatisiert wird. Bei einer vorteilhaften Ausführungsform der Vorrichtung zur Herstellung umfasst die Lichtquelle einen Laser, der monochromatisches Licht erzeugt. Alternativ kann ein Monochromator vorgesehen sein. Dem Fachmann sind unterschiedliche Vorrichtungen zur Monochromatisierung von kohärentem Licht bekannt.

Andere Ausführungsformen sehen vor, dass der Hologrammmaster Licht unterschiedlicher Wellenlängen, d.h. Farben, reflektiert und/oder beugt. Hierfür kann ein mit unterschiedlichen Wellenlängen belichtetes Masterhologramm verwendet werden.

Der Hologrammmaster kann jedoch auch eine nicht holografische Struktur, beispielsweise im Extremfall ein "Spiegel", sein, der mindestens zwei Regionen unterschiedlicher Streucharakteristiken umfasst. Ein solcher Hologrammmaster wäre für eine senkrechte Belichtung und Betrachtung, eine so genannte 90°-90°-Rekonstruktionsgeometrie, geeignet.

Ein anderer sehr vorteilhafter Hologrammmaster umfasst eine spiegelnde Sägezahnstruktur, wie sie beispielsweise in DE 20 2007 006 796 U1 beschrieben ist, deren Sägezähne mindestens zwei unterschiedliche Streucharakteristiken aufweisen. Solche sägezahnartigen Strukturen sind besonders für mehrfarbige Belichtungen geeignet.

Um eine Fälschungssicherheit zu erhöhen und eine Überprüfbarkeit einer Zuordnung des hergestellten Hologramms zu einem Individuum oder einem bestimmten Produkt usw. zu ermöglichen, ist bei einer bevorzugten Ausführungsform vorgesehen, dass das kohärente Licht vor dem Durchstrahlen des holografischen Aufzeichnungsmaterials örtlich gemäß einem Individualisierungsmuster moduliert wird. Es ergibt sich somit ein individualisiertes Hologramm. Die Modulation des Lichts wird mit einem Spatial Light Modulator vorgenommen. Als Spatial Light Modulatoren kommen insbesondere Liquid Crystal on Silicon, DMDs und LCD-Displays in Betracht. Das Individualisierungsmuster ist vorzugsweise so gewählt, dass es sich zumindest zum Teil über die mindestens zwei Regionen erstreckt. Somit ist das Sicherheitsmerkmal, welches durch das Individualisierungsmuster gegeben ist, mit dem wasserzeichenartigen Effekt dieses Hologramms verknüpft. Deshalb ist die Fälschung dieses kombinierten Sicherheitsmerkmals deutlich erschwert.

Die Regionen des Masterhologramms sind bei einer bevorzugten Weiterbildung der Erfindung so ausgestaltet, dass die Intensitätsverteilungen des gestreuten Lichts über die die Streucharakteristiken der mindestens zwei Regionen festlegenden Winkelbereiche nicht konstant sind. Vorzugsweise ist eine Streuintensität unter dem Belichtungsausfallwinkel, der dem optimalen Rekonstruktionsausfallwinkel entspricht, maximal und nimmt mit einer zunehmenden Winkelabweichung von diesem stetig ab. Da sich diese Eigenschaft eines Hologrammmasters auf das erzeugte Hologramm überträgt, ist es für einen Betrachter auf diese Weise einfach möglich festzustellen, ob er das Hologramm unter der optimalen Rekonstruktionsgeometrie betrachtet. Weisen die mindestes zwei rekonstruierten Regionen eine maximale Helligkeit auf, ist die optimale Rekonstruktionsgeometrie eingehalten. Führt eine Variation der Rekonstruktionsgeometrie zu einer Intensitätsabnahme (Helligkeitsabnahme) in einer der mindestens zwei Regionen, so zeigt dieses an, dass die optimale Rekonstruktionsgeometrie nicht mehr erfüllt ist.

Vorzugweise werden die Streucharakteristiken der mindestens zwei Regionen stark unterschiedlich gewählt. Eine erste Region stellt beispielsweise einen holografischen Spiegel dar, der Licht nur in einen sehr kleinen Winkelbereich um den optimalen Belichtungsausfallwinkel (oder Rekonstruktionsausfallwinkel (bei einem fertigen Hologramm)) streut. Mindestens eine zweite Region weist eine relativ starke Streuung auf. Die Streuintensitätsverteilungen sind nun vorzugsweise so gewählt, dass die Streuintensitäten über den jeweiligen zugehörigen Winkelbereich stetig von null bei einer maximalen Abweichung von dem Belichtungsausfallwinkel (Rekonstruktionsausfallwinkel (bei einem fertigen Hologramm)) bis eine Maximalintensität zunehmen und die Maximalintensitäten der mindestens zwei unterschiedlichen Regionen sich abhängig von einer Größe des zugehörigen Winkelbereichs unterscheiden. Eine maximale Streuintensität unter dem Belichtungsausfallwinkel (dem optimalen Rekonstruktionsausfallwinkel (bei einem fertigen Hologramm)) nimmt vorzugsweise ab, je größer der Winkelbereich ist, in den die Region streut. Ein solches Verhalten ergibt sich beispielsweise, wenn die über die entsprechenden Winkelbereiche integrierten Streuintensitäten in den mindestens zwei Regionen gleich sind. Die sich ergebenden Hologramme weisen nun bei der Rekonstruktion in Abhängigkeit von der Abweichung von einer optimalen Rekonstruktionsgeometrie eine Kontrastumkehr der beiden Regionen auf. Ist die Abweichung von der optimalen Rekonstruktionsgeometrie groß, so wird nur die stärker streuende Region der mindestens zwei Regionen "schwach" rekonstruiert. Nähert man sich der optimalen Rekonstruktionsgeometrie etwas an, so nimmt eine Helligkeit der Rekonstruktion der stärker streuenden Region der mindestens zwei Regionen zu. Die schwächer streuende Region der mindesten zwei Regionen ist noch nicht sichtbar. Bei einer noch stärkeren Annäherung an die optimale Rekonstruktionsgeometrie nimmt die Helligkeit der Rekonstruktion der stärker streuenden Region weiter zu und die Rekonstruktion der schwächer streuenden Region setzt ein. Zunächst ist jedoch die Helligkeit der stärker streuenden Region größer als die der schwächer streuenden Region. Bei einer weiteren Annäherung an die optimale Rekonstruktionsgeometrie wird eine ausgezeichnete geometrische Stellung erreicht, bei der die Helligkeit der schwächer streuenden Region die Helligkeit der stärker streuenden Region erreicht. In dieser ausgezeichneten Stellung sind beide Regionen gleich hell wahrnehmbar und für einen Betrachter wie eine vereinigte Region wahrnehmbar. Bei der optimalen Rekonstruktionsgeometrie wird schließlich die schwächer streunende Region als heller wahrgenommen, obwohl eine Helligkeit der stärker streuenden Region bei dieser Geometrie ebenfalls maximal ist. Dennoch findet beim "Überschreiten" der ausgezeichneten Rekonstruktionsgeometrie ein Kontrastwechsel zwischen der stärker streuenden Region und der schwächer streuenden Region der mindestens zwei Regionen statt. Die stärker streuende Region ist bei Abweichungen, die größer als bei der ausgezeichneten Rekonstruktionsgeometrie sind, heller als die schwächer streuende Region. Umgekehrt ist die schwächer streuende Region bei Abweichungen, die geringer als bei der ausgezeichneten Rekonstruktionsgeometrie sind, heller als die stärker streuende Region.

Ein gesamtes Individualisierungsmuster ist somit optimal nur unter der ausgezeichneten Rekonstruktionsgeometrie zu beobachten, bei der die Streuintensitäten der mindestens zwei Regionen gleich sind.

Die vorgeschlagene Ausgestaltung eines Hologrammmasters mit mindestens zwei Regionen erhält man bei einer bevorzugten Ausführungsform, bei der das Bereitstellen des Hologrammmasters ein Herstellen des Masterhologramms umfasst, welches folgende Schritte umfasst: Bereitstellen eines Trägers, Erzeugen von mindestens zwei Regionen unterschiedlicher Oberflächenrauigkeit, so dass der Träger beim Durchstrahlen mit Licht, dieses in den mindestens zwei unterschiedlichen Regionen unterschiedlich streut; Abbilden des die mindestens zwei Regionen aufweisenden Trägers in ein Transmissionshologramm, Rekonstruieren des Transmissionshologramms und Belichten des Rekonstruktionsbilds in ein Volumen-Reflexionshologramm ausgebildet wird, welches der Hologrammmaster ist.

Eine Oberflächenrauigkeit des Trägers lässt sich beispielsweise durch ein Auftragen eines vorzugsweise transparenten Lacks oder mehrerer vorzugsweise transparenter Lacke erreichen, die eine unterschiedliche Rauigkeit aufweisen. Hierdurch können die Regionen in ihrer geometrischen Ausgestaltung, d.h. bezüglich ihrer Form, einfach gestaltet werden. Der Lack wird vorzugsweise durch einen Druck aufgetragen, z.B. Durchdruck (Siebdruck), Hochdruck (Buchdruck, Letterset), Tiefdruck (Rastertiefdruck, Stichtiefdruck), Flachdruck (Offset, Naßoffset, Trockenoffset), Digitaldruck (Inkjet). Gebiete unterschiedlicher Rauigkeit lassen sich auch z.B. durch Aussparungen beim Bedrucken erreichen.

Alternativ kann eine streuende Folie verwendet werden, die Aussparungen oder Ausstanzungen umfasst. Diese wird auf den Träger aufgebracht. Statt Aussparungen oder Ausstanzungen ist es z.B. auch möglich, durch Heißprägen mit einer glatten Fläche die Rauigkeit am Ort des Prägestempels zu reduzieren.

Bei einer solchen Erzeugung des Hologrammmasters kann eine optimale Rekonstruktionsgeometrie für das Masterhologramm und hierüber auch für das herzustellende bzw. hergestellte Hologramm festgelegt werden. Vorzugsweise werden die Abbildungen in das Transmissionshologramm und das als Volumen-Reflexionshologramm ausgebildete Masterhologramm so vorgenommen, dass der Belichtungseinfallwinkel im Bereich zwischen 25° und 75°, bevorzugter im Bereich zwischen 40° und 50° liegt und am bevorzugtesten 45° beträgt und ein Belichtungsausfallwinkel im Bereich zwischen 80° und 135°, bevorzugter zwischen 80° und 100° liegt und am bevorzugtesten 90° beträgt, wobei die Winkel jeweils gegen die Oberfläche des Hologramms gemessen sind..

Wird beispielsweise eine oben erwähnte sägezahnartige Struktur als Hologrammmaster verwendet, so kann die unterschiedliche Streucharakteristik der Sägezähne auch über ein Auftragen von Lack oder Lacken unterschiedlicher Rauigkeit erreicht werden.

Häufig ist eine Verwendung eines Hologramm in einem Sicherheitsdokument gewünscht welches ein raues Substrat umfasst. Wird ein Hologramm mit mindestens zwei Regionen unterschiedlicher Streucharakteristik auf einem Substrat verwendet, welches rau ist, so ist die Streucharakteristik des schwächer streuenden Bereichs vorzugsweise mindestens so groß, dass das Hologramm unter der optimalen Rekonstruktionsgeometrie vollständig rekonstruiert. Es wird somit nach einer bevorzugten Ausführungsform ein Sicherheitsdokument hergestellt, dass ein Substrat mit einer Rauigkeit umfasst, auf dem das Hologramm angebracht wird, bei dem das Hologramm so hergestellt wird, dass der Hologrammmaster so bereitgestellt wird, dass eine schwächer streuende Region der mindestens zwei Regionen so an die Rauigkeit des Substrats angepasst ist, dass ein zughöriger Winkelbereich mindestens so groß ist, dass bei einer Rekonstruktion des auf dem Substrat angebrachten hergestellten Hologramms unter einer optimalen Rekonstruktionsgeometrie das gesamte Hologramm rekonstruiert. Dieses bedeutet, dass der Winkelbereich der schwächer streuenden Region größer ist als ein Winkelbereich einer Streucharakteristik, die für eine Kompensation der Rauigkeit des Substrats notwendig ist. Wird eine Region, die als holografischer Spiegel ausgebildet ist und Licht, das unter dem Rekonstruktionseinfallwinkel auftrifft, nur in den Rekonstruktionsausfallwinkel beugt oder reflektiert, auf ein raues Substrat aufgebracht, so ändert sich das Rekonstruktionsverhalten dieser Region aufgrund der Rauigkeit des Substrats, die das Hologramm lokal beeinflusst. In dieser Region rekonstruiert das Hologramm nur an einigen Stellen, an anderen hingegen nicht. Durch die lokale "Verformung" des Hologramms aufgrund der Rauigkeit des Substrats trifft das Licht nur an einigen Stellen unter dem Rekonstruktionseinfallwinkel auf. An den übrigen Stellen trifft das Licht unter einem abweichenden Winkel auf, so dass keine Rekonstruktion stattfindet. Je größer die Rauigkeit des Substrats in der Region ist, desto größere Flächenanteile "rekonstruieren" bei einer Betrachtung unter dem Rekonstruktionsausfallwinkel nicht. Eine Streucharakteristik einer Region eines Hologramms gilt als angepasst an eine Rauigkeit eines Substrats, wenn das Hologramm, welches auf das Substrat aufgebracht ist, trotz der "Verformung" aufgrund der Rauigkeit vollständig bei einer Betrachtung unter dem Rekonstruktionsausfallwinkel rekonstruiert, wenn es mit Licht unter dem Rekonstruktionseinfallwinkel beleuchtet wird. Wird ein homogenes Hologramm mit einer einheitlichen Streucharakteristik auf dem Substrat einheitlicher Rauigkeit angebracht und ist die Streucharakteristik an die Rauigkeit optimal angepasst, so ist bei einer Abweichung der Rekonstruktionsgeometrie von der optimalen Rekonstruktionsgeometrie keine oder nur eine sehr viel schwächere Intensitätsabhängigkeit von dieser Abweichung zu beobachten als bei einer Verwendung des Hologramms auf einem glatten Substrat. Ist jedoch die Streucharakteristik einer Region des Hologramms so ausgestaltet, dass deren zugehöriger Winkelbereich größer als der Winkelbereich ist, der für die Kompensation der Rauigkeit des Substrats (bei einem als idealer Spiegel ausgebildeten Hologramm) notwendig ist, so ist bei einer Abweichung von der optimalen Rekonstruktionsgeometrie erneut eine Intensitätsabhängigkeit zu beobachten.

Als besonders vorteilhaft hat es sich erwiesen, Sicherheitsdokumente mit einem Substrat, welches Bereiche unterschiedlicher Rauigkeiten aufweist, herzustellen und mit einem Hologramm zu versehen, bei denen das Hologramm so hergestellt wird, dass die mindestens zwei Regionen in ihren geometrischen Ausgestaltungen an die mindestens zwei Bereiche unterschiedlicher Rauigkeit des Substrats angepasst sind. Wird das Sicherheitsdokument mit einem Substrat auf Papierbasis hergestellt, welches mindestens ein Wasserzeichen umfasst, so ist eine Rauigkeit des Substarts im Bereich des mindestens einen Wasserzeichens größer als in den übrigen Bereichen. Die mindestens zwei Regionen des Hologrammmasters werden nun vorzugsweise so gewählt und ausgebildet, dass eine stärker streuende Region der mindestens zwei Regionen geometrisch angepasst an den Bereich größerer Rauigkeit, beispielsweise den Bereich des mindestens einen Wasserzeichens, ausgebildet wird oder ist, so dass das Hologramm auf dem Substrat so angebracht werden kann, dass die stärker streuende Region den Bereich größerer Rauigkeit (Bereich des mindestens einen Wasserzeichens) überdeckt, vorzugsweise deckungsgleich überdeckt, und die Streucharakteristik der stärker streuenden Region in einen größeren Winkelbereich streut, als dieses durch das Substrat im Bereich der größeren Rauigkeit (Bereich des Wasserzeichens) verursacht würde. In solchem Falle ist eine Intensitätsveränderung in Abhängigkeit von einer Abweichung von der optimalen Rekonstruktionsenergie auch im Bereich des Wasserzeichens beobachtbar. Die übrigen der mindestens zwei Regionen streuen schwächer als die stärker streuende Region der mindesten zwei Regionen.

Bei einer bevorzugten Ausführungsform weist die schwächer streuende Region des Hologramms bzw. des Hologrammmasters eine an die Rauigkeit des Substrats im Bereich größerer Rauigkeit (Bereich des mindestens einen Wasserzeichens) angepasste Streucharakteristik auf oder noch bevorzugter eine an die Rauigkeit des Substrats im Bereich geringerer Rauigkeit (Bereich außerhalb des mindestens einen Wasserzeichens) angepasste Rauigkeit auf. Auch bei einem so hergestellten Hologramm ist eine Kontrastumkehr bei einer Annäherung an die optimale Rekonstruktionsgeometrie zu beobachten. Die über dem Bereich geringerer Rauigkeit des Substrats angebrachte schwächer streuende Region ist nur bei einer stärkeren Annäherung an die optimale Rekonstruktionsgeometrie beobachtbar als die stärker streuende Region des Hologramms, die über dem stärker streuenden Bereich des Substrats (über dem Wasserzeichen) angebracht ist. Diese stärker streuende Region ist somit in einem größeren Winkelbereich beobachtbar, und wir bei großen Abweichungen ausschließlich oder heller als die schwächer streuende Region des Hologramms wahrgenommen. Bei der Betrachtung unter der optimalen Rekonstruktionsgeometrie wird hingegen erneut die schwächer streuende Region, die nur über ein geringeres Winkelsegment rekonstruiert, als heller wahrgenommen.

Für eine Verifikation ist daher vorgesehen, dass das Hologramm oder das Sicherheitsdokument unter verschiedenen Rekonstruktionsgeometrien rekonstruiert wird und eine Auswerteeinheit ausgebildet ist, die eine Kontrastumkehr als Verifikationsmerkmal zu ermitteln. Bei einer möglichen Ausführungsform wird das Hologramm unter unterschiedlichen Beleuchtungswinkeln beleuchtet und unter dem Rekonstruktionsausfallwinkel betrachtet. Bei einer Ausführungsform besitzt die Verifikationsvorrichtung hier für mehrere Lichtquellen. Ebenso ist es möglich, dass das Hologramm unter dem Rekonstruktionseinfallwinkel beleuchtet wird und eine Rekonstruktion unter verschiedenen Winkeln von der Erfassungseinheit erfasst wird.

Die mehreren Lichtquellen sind vorzugsweise als weiße LEDs ausgebildet, die unter anderem Licht der Wellenlänge erzeugen und emittieren, mit dem das Hologramm aufgenommen wurde. Alternativ können LEDs verwendet werden, die Licht genau dieser Wellenlänge erzeugen.

Bei einer anderen Ausführungsform kann die mindestens eine Lichtquelle schwenkbar angeordnet sein, so dass ein Beleuchtungswinkel variiert werden kann.

Ebenso ist es möglich eine Optik vorzusehen, die das Licht der mindestens einen Lichtquelle gesteuert unter verschiedenen Beleuchtungswinkeln auf das Hologramm lenken kann.

Um ein Individualisierungsmuster vollständig erfassen zu können, ist die Verifizierungsvorrichtung so ausgestaltet, dass das Hologramm unter einer ausgezeichneten Rekonstruktionsgeometrie erfassbar ist, bei der Rekonstruktionen der mindestens zwei Bereiche eine annähernd gleiche Helligkeit aufweisen, d.h. eine Streuintensität nahezu gleich ist.

Um ein Hologramm möglichst fälschungssicher in einem Sicherheitsdokument zu integrieren, wird das Hologramm vorzugsweise hergestellt, auf einem Substrat angeordnet oder angebracht und gegebenenfalls mit weiteren Schichten zu einem Dokumentkörper laminiert.

Es wird angemerkt, dass die Belichtung des Hologramms mit sichtbarem Licht oder auch Licht im UV- oder IR-Spektralbereich erfolgen kann. Die Belichtung kann ebenfalls mit Licht unterschiedlicher Wellenlängen, d.h. farbig, erfolgen. Findet eine Individualisierung des Hologramms statt, so können für die unterschiedlichen Wellenlängen unterschiedliche Individualisierungsmuster verwendet werden.

Bei einer bevorzugten Ausführungsform sind mehr als zwei Regionen unterschiedlicher Streucharakteristiken vorgesehen. Beispielsweise kann eine schwächer streuende Region eine stärker streuende Region umschließen, die wiederum eine ganz schwach streuende Region umschließt.

Die Erfindung wird nachfolgend unter Bezugnahme auf eine Zeichnung näher erläutert. Hierbei zeigen:
- Fig. 1: eine schematische Darstellung einer Vorrichtung zum Herstellen eines Hologramms;
- Fig. 2: eine schematische Darstellung von Intensitätsverteilungen;
- Fig. 3a,3b: eine schematische Darstellung zur Erläuterung einer Herstellung eines Hologrammmasters;
- Fig. 4a bis 4d: schematische Ansichten eines Sicherheitsdokuments mit einem Holgramm unter vier verschiedenen Rekonstruktionsgeometrien;
- Fig. 5 bis 5c: eine schematische Ansichten eines anderen Sicherheitsdokuments, auf dem ein vollflächiges Hologramm angebracht ist unter drei verschiedenen Rekonstruktionsgeometrien; und
- Fig. 6: eine schematische Darstellung einer Vorrichtung zur Verifizierung eines Hologramms oder Sicherheitsdokuments.

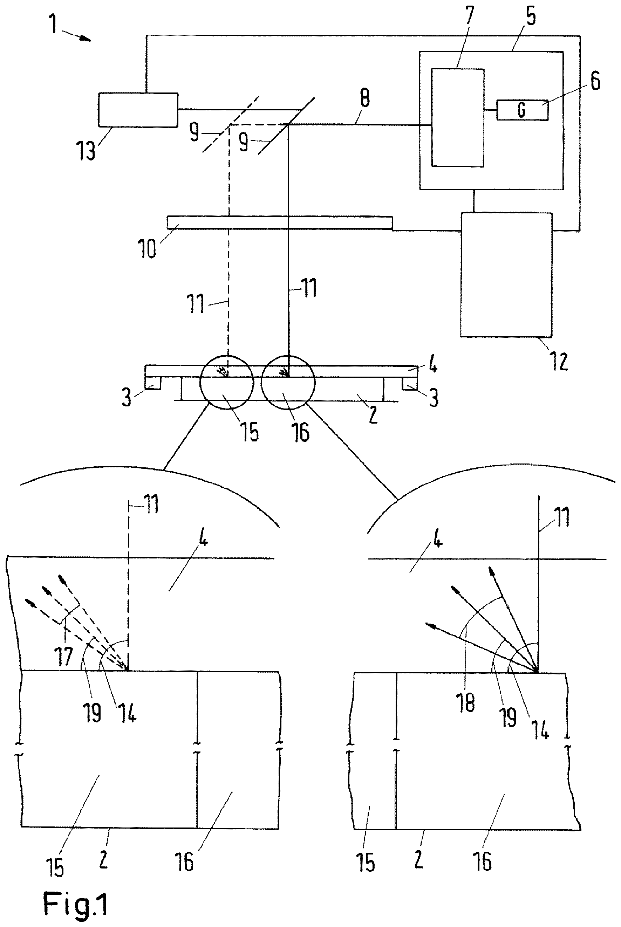

In Fig. 1 ist schematisch eine Vorrichtung 1 zum Herstellen eines Hologramms dargestellt. Vor einem Hologrammmaster 2 ist auf einer Führung 3 ein holografisches Aufzeichnungsmaterial 4 angeordnet. Die Führung 3 ist relativ zu dem Hologrammmaster 2 so angeordnet, dass das holografische Aufzeichnungsmaterial 4 vorzugsweise vollflächig in Kontakt mit dem Hologrammmaster 2 ist. Für den Fachmann versteht es sich, dass hierbei eine transparente Schutzschicht (nicht dargestellt), vorzugsweise aus Polyethylenterephthalat (PET), zwischen dem holografischen Aufzeichnungsmaterial 4 und dem Hologrammmaster 2 angeordnet sein kann. Diese Schutzschichten erleichtert ein Ablösen des holografischen Aufzeichnungsmaterials 4 von dem Hologrammmaster 2, nachdem das Hologramm fertig in das holografische Aufzeichnungsmaterial 4 belichtet ist.

Der Hologrammmaster 2 ist eine vorzugsweise holografisch hergestellte Struktur, die durch ein holografisches Abbilden einer Mattscheibe erzeugt ist, wie unten genauer erläutert wird.

Die Vorrichtung 1 umfasst ferner eine Lichtquelle 5, die in der Lage ist, kohärentes Licht 8 zu erzeugen. Dieses kann im sichtbaren, ultravioletten oder infraroten Spektralbereich liegen. Hierfür kann die Lichtquelle 5 beispielsweise einen Laser 6 umfassen, der kohärentes und in der Regel momochromatisches Licht erzeugt. Die Lichtquelle 5 kann in einer Ausführungsform einen Monochromator 7 umfassen der das kohärente Licht monochromatisiert, wenn beispielsweise anstelle des Lasers 6 eine andere Lichterzeugungseinheit verwendet wird oder der Laser 6 Licht mehrerer Wellenlängen produziert.

Das kohärente Licht 8 wird von der Lichtquelle 5 vorzugsweise als streifenförmiger Lichtstrahl bereitgestellt. Dies bedeutet, dass der Lichtstrahl quer zur Ausbreitungsrichtung entlang einer Raumdimension ausgedehnt ist. Diese Ausdehnung entspricht vorzugsweise zumindest einer Breite des Hologramms, welches hergestellt werden soll. Im dargestellten Beispiel ist das kohärente Licht 8 senkrecht zur Zeichenebene streifenförmig ausgedehnt.

Die Vorrichtung 1 umfasst ferner eine Abbildungsoptik, die hier vereinfachend als Umlenkspiegel 9 dargestellt ist. Die Abbildungsoptik ist so ausgebildet, dass das kohärente Licht 8 durch einen Spatial Light Modulator 10 geführt wird, in dem dieses räumlich moduliert wird. Dies bedeutet, dass unterschiedliche Positionen entlang der streifenförmigen Ausdehnung des kohärenten Lichts 8 quer zur Ausbreitungsrichtung unterschiedlich moduliert werden. Ebenso ist die Modulation von einer lateralen Position an der das Licht durch den Spatial Light Modulator tritt abhängig. Die Modulation erfolgt entsprechend eines Individualisierungsmusters für das Hologramm. Der modulierte kohärente Lichtstrahl 11 durchstrahlt das holografische Aufzeichnungsmaterial 4 und wird zumindest zum Teil an dem Hologrammmaster 2 gebeugt und/oder reflektiert. Das reflektierte und/oder gebeugte Licht interferiert mit dem das holografische Aufzeichnungsmaterial durchstrahlenden Licht 11 und belichtet so das Hologramm in das holografische Aufzeichnungsmaterial 4.

Eine Steuereinheit 12 der Vorrichtung 1 ist ausgebildet, eine Relativbewegung des kohärenten Lichts 8 bzw. modulierten kohärenten Lichts 11 einerseits und des holografischen Aufzeichnungsmaterials 4 und des Hologrammmasters 2 andererseits zu steuern. Hierfür ist die Steuereinheit 12 mit einer Antriebseinheit 13 verbunden. Diese ist in der dargestellten Ausführungsform so mit der Abbildungsoptik, d.h. dem Umlenkspiegel 9, gekoppelt, dass über eine Verschiebung des Umlenkspiegels synchronisiert der Spatial Light Modulator 10 sowie der Hologrammmaster 2 streifenweise abgetastet werden. Die Steuereinheit 12 ist ferner so ausgebildet, dass eine Belichtungszeit in dem holografischen Aufzeichnungsmaterial jeweils angepasst an eine spektrale Empfindlichkeit des holografischen Aufzeichnungsmaterials 4 und an die jeweils zur Belichtung des Hologramms verwendete Wellenlänge des kohärenten Lichts 8, 11 angepasst ist. Die erforderliche Belichtungszeit hängt von der Intensität des kohärenten Lichts und der spektralen Empfindlichkeit des holografischen Aufzeichnungsmaterials 4 ab. Somit kann die Steuereinheit 12 entweder eine Intensität der Lichtquelle und/oder eine Relativgeschwindigkeit und/oder eine Belichtungsdauer in einer Position des holografischen Aufzeichnungsmaterials 4 steuern.

Die Belichtung kann in einem so genannten Step-and-Repeat-Verfahren oder kontinuierlich erfolgen, beispielsweise bei einem Trommelbelichtungsverfahren. Bei letzterem ist der Hologrammmaster ein eine Trommel eingearbeitet, auf der das holografische Aufzeichnungsmaterial aufliegt. Während der Belichtung dreht sich die Trommel. Bei einem Step-and-Repeat-Verfahren wird der zu belichtende Bereich des als Film ausgebildeten holografischen Aufzeichnungsmaterials auf den Master gebracht und kommt dort zur Ruhe. Im Anschluss erfolgt eine Belichtung, z.B. scannend oder vollflächig, die die Kontaktkopie des Hologramms vornimmt. Gegebenenfalls werden hierbei Laserstrahlen individualisiert oder personalisiert. Nach der Belichtung erfolgt ein Weitertransport des als Film ausgebildeten holografischen Aufzeichnungsmaterials, bis der nächste unbelichtete Bereich auf dem Hologrammmaster zur Ruhe kommt.

Beschrieben ist die Beleuchtung mit Licht einer Wellenlänge (Farbe). Ebenso gut kann die Beleuchtung mit unterschiedlichen Wellenlängen erfolgen. Hieran muss lediglich der Hologrammmaster angepasst sein. Eine Individualisierung kann für die unterschiedlichen Wellenlängen unterschiedlich erfolgen. D.h., die unterschiedlichen Wellenlängen können über unterschiedliche Individualisierungsmuster räumlich moduliert werden.

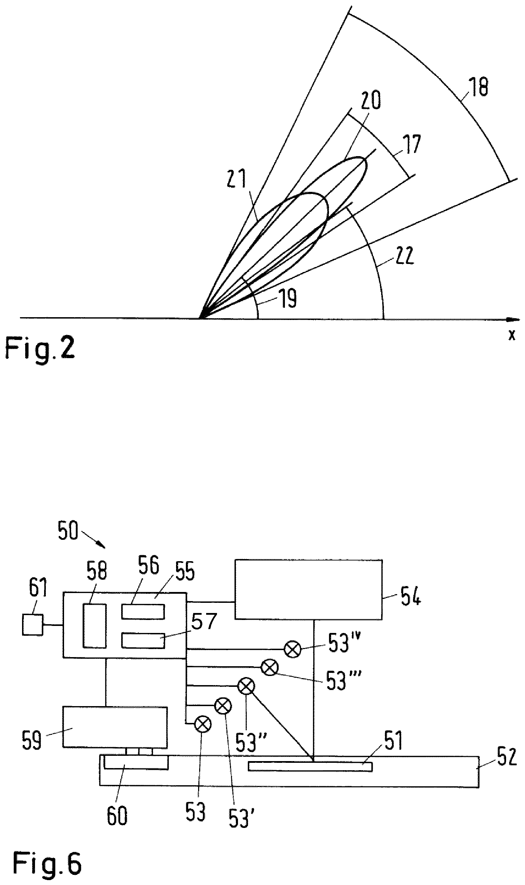

Der Hologrammmaster 2 wird in dem dargestellten Beispiel unter einem Belichtungseinfallwinkel 14 von 90° von dem modulierten kohärenten Licht 11, welches das holografische Aufzeichnungsmaterial durchstrahlt hat, beleuchtet. Der Hologrammmaster 2 umfasst in der dargestellten Ausführungsform eine schwächer streuende Region 15 und eine stärker streuende Region 16. In beiden Regionen 15, 16 wird das Licht in unterschiedliche Winkelbereiche 17, 18 um denselben Belichtungsausfallwinkel 19 von 45° reflektiert und/oder gebeugt. Beispielhaft wird angenommen, dass der Winkelbereich der stärker streuenden Region 16 Winkel von 45°±20° umfasst und die schwächer oder geringer streuende Region 15 Winkel von45°±10° umfasst. Die unter den verschiedenen Winkeln beobachteten Intensitäten hängen von dem jeweiligen Winkel ab. Beide Regionen 15, 16 weisen eine Intensitätsverteilung auf, die bei einer maximalen Abweichung von dem Belichtungsausfallwinkel 19 also bei 25° oder 65° für die stärker streuende Region 16 und bei 35° oder 55° für die schwächer streuende Region bei null beginnt und/oder endet. Je mehr man sich dem Belichtungsausfallwinkel 19 nähert, desto größer wird die Intensität in beiden Intensitätsverteilungen. Diese erreichen jeweils bei dem Belichtungsausfallwinkel 19 ein Intensitätsmaximum. Die Intensitätsverteilung 20 für die schwächer streuende Region 15 und die Intensitätsverteilung 21 für die stärker streuende Region16 sind schematisch in Fig. 2, welches ein Polardiagramm ist, dargestellt. Die Intensität ist durch einen Abstand vom Ursprung gegeben der Winkel ist gegen die X-Achse im mathematisch positiven Sinn gemessen. Zu erkennen ist, dass die beiden Intensitätsverteilungen unter einem ausgezeichneten Winkel 22 die gleiche Intensität aufweisen. Unter diesem Winkel sind die Rekonstruktionen der schwächer streuenden Region 15 und der stärker streuenden Region 16 gleich intensiv bzw. gleich hell.

Die hier erläuterten Winkelabhängigkeiten des Hologrammmasters 2 übertragen sich auf das in das holografische Aufzeichnungsmaterial 4 belichtete Hologramm. Das fertige Hologramm wird anschließend vorzugsweise in ein Sicherheitsdokument integriert. Hierzu wird es bevorzugt zwischen Schichten angeordnet, von denen eine als Substrat dient, auf die das Hologramm aufgebracht wird. Anschließend werden die schichten zu einem Dokumentkörper laminiert. Eine andere bevorzugte Integration ist ein Aufkleben des fertigen Hologramms beispielsweise auf ein als Kunststoffkarte ausgebildetes Sicherheitsdokument. In das Sicherheitsdokument können weitere Sicherheitsmerkmale integriert sein.

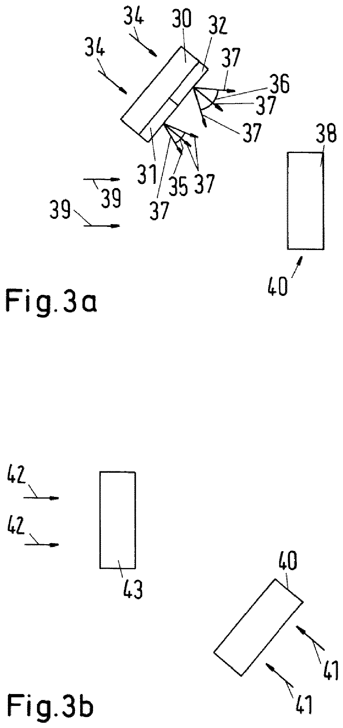

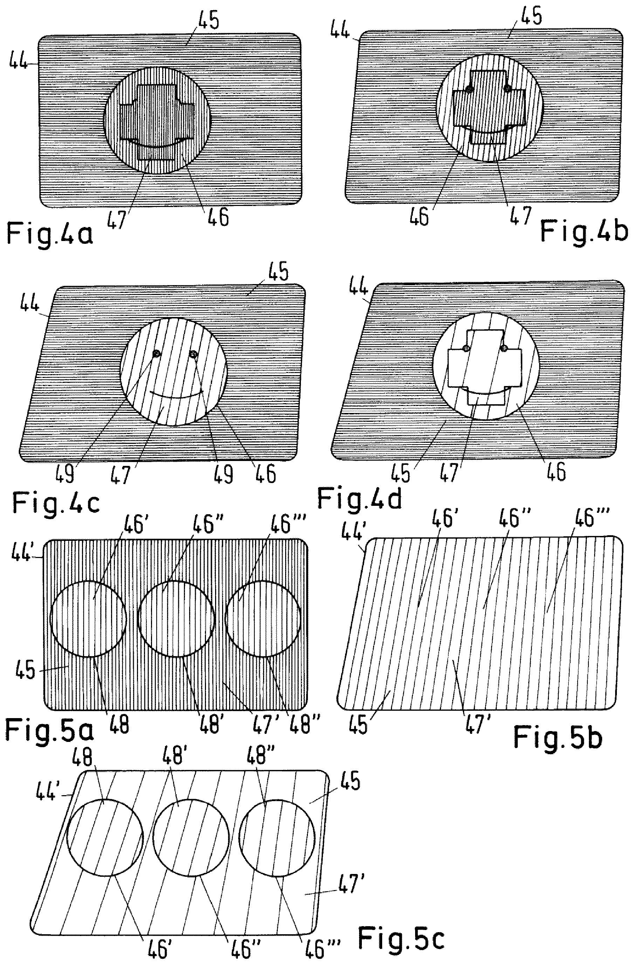

Ein solches Sicherheitsdokument mit einem Hologramm wird unten mit Bezug auf Fig. 4a bis 4d näher beschrieben. Zunächst wird die Herstellung des Hologrammmasters 2 anhand der Fig. 3a und 3b schematisch erläutert.

Auf einen ebenen transparenten Träger 30, der beispielsweise als polierte Glasplatte ausgebildet sein kann werden unterschiedliche transparente Lacke aufgebracht, die entsprechend eine Schicht 31 mit einer geringeren Rauigkeit und eine Schicht 32 mit einer größeren Rauigkeit bilden (vgl. Fig. 3a). Der Lack wird vorzugsweise durch einen Druck aufgetragen, z.B. Durchdruck (Siebdruck), Hochdruck (Buchdruck, Letterset), Tiefdruck (Rastertiefdruck, Stichtiefdruck), Flachdruck (Offset, Naßoffset, Trockenoffset), Digitaldruck (Inkjet). Der Träger 30 mit den Schichten 31,32 stellt eine Mattscheibe dar. Der Träger 30 und die Schichten 31, 32 werden anschließend von kohärentem monochromatischem Licht 34 der Wellenlänge durchstrahlt, die an die Wellenlänge angepasst ist, mit der auch später das Hologramm (vgl. Fig. 1) hergestellt werden soll. Die Anpassung erfolgt so, dass ein Schrumpfen des holografischen Aufzeichnungsmaterials beim Entwickeln berücksichtigt wird. An den Schichten 31, 32 wird das Licht in Winkelbereiche 35, 36 gestreut, die mit den Winkelbereichen 17, 18 nach Fig. 1 korrespondieren. Das gestreute kohärente Licht 37 wird in ein holografisches Aufzeichnungsmaterial 38 mit hierzu kohärentem Referenzlicht 39 so zur Interferenz gebracht, dass ein Transmissionshologramm 40 entsteht. Dieses Transmissionshologramm 40 wird, wie in Fig. 3b dargestellt ist, so mit kohärentem Licht 41 rekonstruiert und weiterem hierzu kohärentem Referenzlicht 42 in einem weiteren Aufzeichnungsmaterial 43 zur Interferenz gebracht, so dass die Rekonstruktion des Transmissionshologramms 40 in das weiteres holografisches Aufzeichnungsmaterial 43 als Volumen-Transmissionshologramm belichtet wird, welches als Hologrammmaster 2 in der Vorrichtung 1 nach Fig. 1 eingesetzt werden kann. Soll der Hologrammmaster 2 für unterschiedliche Wellenlängen rekonstruieren, so ist der beschriebene Vorgang mit diesen Wellenlängen analog auszuführen.

Alternativ zu einem als Hologramm ausgebildeten Masterhologramm kann eine sägezahnartige reflektierende Struktur verwendet werden, bei der die Sägezahnflächen reflektierend sind. Solche Strukturen sind beispielhaft in DE 20 2007 006 796 U1 beschrieben. Die sägezahnartige Struktur ist groß im Verhältnis zur Wellenlänge des Lichts. Die Regionen unterschiedlicher Streucharakteristik können erneut durch ein Aufbringen eines Lackes oder mehrerer Lacke erreicht werden. Ein solcher Hologrammmaster ist für eine Belichtung mit unterschiedlichen Wellenlängen besonders geeignet.

In Fig. 4a bis 4d sind vier Ansichten eines Sicherheitsdokuments 44 unter vier verschiedenen Rekonstruktionsgeometrien für ein kreisförmig ausgebildetes Hologramm 45 dargestellt. Die vier Rekonstruktionsgeometrien entsprechen vier unterschiedlichen Verkippungen des Sicherheitsdokuments 44 relativ zu einer Betrachtungsrichtung und einer Beleuchtungsrichtung.

Das Hologramm 45 umfasst eine stärker streuende Region 46, die eine kreuzförmig ausgebildete schwächer streuende Region 47 umgibt. Die Rekonstruktionsgeometrie, die mit der Ansicht nach Fig. 4a korrespondiert weicht am stärksten von einer optimalen Rekonstruktionsgeometrie ab, deren zugehörige Ansicht in Fig. 4d dargestellt ist. Die Fig. 4b und 4c zeigen Ansichten des Sicherheitsdokuments 44 bzw. des Hologramms 45 für Rekonstruktionsgeometrien die sich entsprechend Schrittweise der optimalen Rekonstruktionsgeometrie annähern.

Unter der stark von der optimalen Rekonstruktionsgeometrie abweichenden Rekonstruktionsgeometrie (vgl. Fig. 4a) rekonstruiert nur die stärker streuende Region 46 mit einer schwachen Intensität. Die schwächer streuende Region 47 wird nicht rekonstruiert. Diese bedeutet, dass der Beleuchtungswinkel und/oder der Betrachtungswinkel größer als der Winkelbereich der Streucharakteristik der schwächer streuenden Region 47 sind.

Nähert man die Rekonstruktionsgeometrie der optimalen Rekonstruktionsgeometrie an, so wird die Rekonstruktion der stärker streuenden Region 46 heller (intensiver), die schwächer streuende Region 47 bleibt jedoch zunächst dunkel. Erst ab einer Annährung, deren zugehörige Ansicht man in Fig. 4b sieht, beginnt auch eine Rekonstruktion der schwächer streuenden Region 47. Eine Helligkeit (Intensität) der schwächer streuenden Region 47 nimmt weiter zu.

In Fig. 4c ist eine Ansicht gezeigt, die mit der ausgezeichneten Rekonstruktionsgeometrie korrespondiert, bei der beide Regionen gleich hell (gleich intensiv) wahrgenommen werden. Gegenüber der Ansicht nach Fig. 4b sind beide Regionen heller. In dieser Stellung ist auch ein Individualisierungsmuster, das hier durch zwei Kreise 49 symbolisiert ist, die beispielsweise Augen eines Passbilds repräsentieren könnten, gut zu erkennen und zu erfassen. Ein Vergleich mit den anderen Figuren 4a, 4b und 4d zeigt, dass dieses unter den anderen Rekonstruktionsgeometrien nicht oder nicht optimal möglich ist.

In Fig. 4d ist schließlich eine Ansicht zu sehen, die bei der optimalen Rekonstruktionsgeometrie aufgenommen ist. Die beiden Regionen 46, 47 haben beide noch einmal an Helligkeit gewonnen, die schwächer streuende Region 47 jedoch stärker als die stärker streuende Region 46. Gegen über den Ansichten nach Fig. 4a und 4b hat eine Kontrastumkehr stattgefunden, die zur Verifikation einer Echtheit des Hologramms 45 und/oder des Sicherheitsdokuments 44 herangezogen werden kann.

In Fig. 5a ist eine Ansicht eines anderen Sicherheitsdokuments 44' dargestellt auf dem ein vollflächiges Hologramm 45' angebracht ist. Das Substrat des Sicherheitsdokuments 44' auf dem das Hologramm 45' angebracht ist, ist ein Papiersubstrat, das in drei kreisförmigen Bereichen 48, 48', 48" Wasserzeichen umfasst. In diesen Bereichen 48, 48', 48" ist eine Rauigkeit des Substrats erhöht.

Um eine Rekonstruktion des Hologramms 45 auch an diesen Stellen zu gewährleisten, weist das Hologramm kreisförmige stärker streuende Regionen 46', 46" und 46"' auf, die die kreisförmigen Bereiche vorzugsweise deckungsgleich überdecken. Der die Streucharakteristiken dieser stärker streuenden Regionen 46', 46" und 46"' festlegende Winkelbereich ist größer als ein Streuwinkelbereich, den die Rauigkeit des Papiersubstrats in den Bereichen 48, 48', 48" der Wasserzeichen verursachen würden. Die schwächer streuende Region 47', die den Rest des Papiersubstrats außerhalb der kreisförmigen Bereiche 48, 48', 48" überdeckt weist eine Streucharakteristik auf, die an die Rauigkeit des Substrats außerhalb der kreisförmigen Bereiche 48, 48', 48" angepasst ist. Dies bedeutet, dass ein Winkelbereich in den die schwächer streuende Region 47' Licht bei der Rekonstruktion streut, bzw. aus dem Licht um den Rekonstruktionseinfallwinkel für eine Rekonstruktion einfallen darf, größer als oder gleich groß wie ein Winkelbereich einer Streuung ist, die durch die Rauigkeit des Papiersubstrats außerhalb des kreisförmigen Bereiches 48, 48', 48" verursacht würde. Hierbei kann der Winkelbereich der schwächer streuenden Region 47' auch größer als ein Winkelbereich einer Streuung sein, die durch die Rauigkeit in den Bereichen 48, 48', 48" verursacht würde. In jedem Fall ist jedoch der Winkelbereich der Streucharakteristik der schwächer streuenden Region 47' kleiner als der der stärker streuenden Regionen 46', 46" und 46"'. So bleibt ein Kontrastumkehreffekt bei einer Annäherung der Rekonstruktionsgeometrie an die optimale Rekonstruktionsgeometrie erhalten.

Bei der in Fig. 5a gezeigten Ansicht ist eine Abweichung von dieser optimalen Rekonstruktionsgeometrie noch so groß, dass nur die stärker streuenden Regionen 46', 46" und 46"' mit schwacher Intensität rekonstruiert werden. In Fig. 5b ist eine Ansicht bei der ausgezeichneten Rekonstruktionsgeometrie gezeigt, bei der beide Regionen gleich hell wahrgenommen werden. In Fig. 5c ist die Ansicht bei der optimalen Rekonstruktionsgeometrie gezeigt, bei der die schwächer streuende Region 47' heller ist als die stärker streuenden Regionen 46', 46" und 46"'. Gut zu erkennen ist die Kontrastumkehr, die stattgefunden hat.

In Fig. 6 ist eine beispielhafte Ausführungsform einer Vorrichtung 50 zur Verifizierung eines Hologramms 51 bzw. eines Sicherheitsdokuments 52, in welches das Hologramm 51 integriert ist, dargestellt. Die Vorrichtung 50 zur Verifizierung umfasst mindestens eine, vorzugsweise jedoch mehrere Lichtquellen 53, 53', 53", 53"',... die zeitversetzt Licht der Wellenlänge emittieren mit der das Hologramm 51 erzeugt wurde. Die Lichtquellen 53, 53', 53", 53"',... sind relativ zu dem Hologramm 51 so angeordnet, dass das Hologramm unter verschiedenen Winkeln beleuchtet wird. Von einer Erfassungseinheit 54, die beispielsweise als Kamera oder CCD ausgebildet ist und das Hologramm 52 unter dem Rekonstruktionsausfallwinkel, dem optimalen Betrachtungswinkel, betrachtet, werden die Rekonstruktionen des Hologramms 51 ortsaufgelöst und helligkeitsaufgelöst erfasst. Eine Steuerung 55 steuert sowohl die mehreren Lichtquellen 53, 53', 53", 53"',... als auch die Erfassungseinheit 54. Ferner umfasst die Steuereinheit eine Auswerteeinheit 56, die Veränderungen der erfassten Rekonstruktionen des Hologramms 51 auswertet. Jede der mehreren Lichtquellen ist mit einer Rekonstruktionsgeometrie verknüpft. Durch geeignete Ansteuerung der mehreren Lichtquellen 53, 53', 53", 53"',... kann somit eine Kontrastumkehr von einer Vergleichseinheit 58 ermittelt werden. Eine der mehreren Lichtquellen 53, 53', 53", 53"',... ist so angeordnet, dass bei ihrem Betrieb die Rekonstruktion unter der ausgezeichneten Rekonstruktionsgeometrie stattfindet. In dieser Stellung wird das Individualisierungsmuster von einer Extraktionseinheit 57 extrahiert und mit Informationen abgeglichen, die beispielsweise in einem in das Sicherheitsdokument integrierten Chip 60 gespeichert sind, und welche über eine weitere Erfassungseinheit 59, die beispielsweise als Chipkartenleser ausgebildet ist, erfasst werden. Über eine Ausgabeeinheit 61 wird ein Ergebnis der Verifikation ausgegeben.

### Bezugszeichenliste

- 1: Vorrichtung zum Herstellen eines Hologramms
- 2: Hologrammmaster
- 3: Führung
- 4: holografisches Aufzeichnungsmaterial
- 5: Lichtquelle
- 6: Laser
- 7: Zusammenführ- und Auswahleinheit
- 8: kohärentes Licht
- 9: Umlenkspiegel
- 10: Spatial Light Modulator
- 11: moduliertes kohärentes Licht
- 12: Steuereinheit
- 13: Antriebseinheit
- 14: Belichtungseinfallwinkel
- 15: schwächer streuende Region
- 16: stärker streuende Region
- 17: Winkelbereich (schwächer streuende Region)
- 18: Winkelbereich (stärker streuende Region)
- 19: Belichtungsausfallwinkel
- 20: Intensitätsverteilung (schwächer streuende Region)
- 21: Intensitätsverteilung (stärker streuende Region)
- 22: ausgezeichneter Winkel
- 30: Träger
- 31: Schicht (schwächer streuend)
- 32: Schicht (stärker streuend)
- 34: Licht
- 35: Winkelbereich (schwächer streuend)
- 36: Winkelbereich (stärker streuend)
- 37: gestreutes Licht
- 38: holografisches Aufzeichnungsmaterial
- 39: Referenzlicht
- 40: Transmissionshologramm
- 41: Licht
- 42: weiteres Referenzlicht
- 43: weiteres holografisches Aufzeichnungsmaterial
- 44,44': Sicherheitsdokument
- 45,45': Hologramm
- 46, 46', 46", 46''': stärker streuende Regionen
- 47, 47': schwächer streuende Regionen
- 48, 48', 48": kreisförmige Bereiche
- 49: Kreise
- 50: Vorrichtung zur Verifizierung eines Hologramms/Sicherheitsdokuments
- 51: Hologramm
- 52: Sicherheitsdokument
- 53, 53', 53",...: Lichtquelle
- 54: Erfassungseinheit
- 55: Steuerung
- 56: Auswerteeinheit
- 57: Extraktionseinheit
- 58: Vergleichseinheit
- 59: weitere Erfassungseinheit
- 60: Chip
- 61: Ausgabeeinheit

## Patentansprüche

1. Verifizierungsvorrichtung (50) für ein Hologramm (51), wobei das Hologramm ein Hologramm (45, 45', 51) ist, welches unter einem Rekonstruktionseinfallwinkel einfallendes Licht bei einer Rekonstruktion in einen Rekonstruktionsausfallwinkel reflektiert und/oder beugt, und wobei das Hologramm mindestens zwei Regionen (46, 46', 46", 46"', 47, 47') umfasst, die aus unterschiedlich großen Winkelbereichen um den Rekonstruktionseinfallwinkel einfallendes Licht in entsprechende unterschiedlich große Winkelbereiche um den Rekonstruktionsausfallwinkel reflektieren und/oder beugen, und/oder ein Sicherheitsdokument (52) mit einem solchen Hologramm (51), umfassend mindestens eine Lichtquelle (53) und eine Erfassungseinheit (54) zum Erfassen von Rekonstruktionen des Hologramms (51), wobei die Erfassungseinheit (54) ausgebildet ist, eine Rekonstruktion des Hologramms örtlich aufgelöst zu erfassen, und die Verifizierungsvorrichtung (50) dazu ausgebildet ist, Rekonstruktionen des Hologramms (51) unter mindestens zwei vorgegebenen Rekonstruktionsgeometrien, die an die Winkelbereiche der Streucharakteristiken der mindestens zwei Regionen (46, 46', 46", 46"', 47, 47') angepasst sind, zu erfassen, und ferner eine Auswerteeinheit (56), welche dazu ausgebildet ist, anhand von Unterschieden der erfassten Rekonstruktionen eine Verifikationsentscheidung zu treffen, und eine Ausgabeeinheit (61) zum Ausgeben der Verifikationsentscheidung vorgesehen sind, **dadurch gekennzeichnet, dass** die Verifizierungsvorrichtung (50) dazu ausgebildet ist, eine Rekonstruktion des Hologramms (51) unter einer ausgezeichneten Rekonstruktionsgeometrie zu erfassen, unter der die mindestens zwei Regionen (46, 46', 46", 46"', 47, 47') in der Rekonstruktion als gleich hell oder gleich intensiv wahrgenommen werden, und dass die Verifizierungsvorrichtung (50) eine Extraktionseinheit (57) aufweist, welche ausgebildet ist, um aus einer unter der ausgezeichneten Rekonstruktionsgeometrie erfassten Rekonstruktion des Hologramms (51) ein sich zumindest über Teile der beiden Regionen (46, 46', 46", 46"', 47, 47') erstreckendes
Individualisierungsmuster des Hologramms zu extrahieren, und dass die Verifizierungsvorrichtung (50) eine mit der Auswerteeinheit (56) gekoppelte weitere Erfassungseinheit (59) umfasst, welche dazu ausgebildet ist, um ein zusätzliches Merkmal des Hologramms (51) oder Sicherheitsdokuments (52) zu erfassen, und dass die Auswerteeinheit (56) ausgebildet ist, das Individualisierungsmuster gegen das zusätzliche Merkmal abzugleichen.

2. Verifizierungsvorrichtung (50) nach Anspruch 1, **dadurch gekennzeichnet, dass** die Verifizierungsvorrichtung (50) zusätzlich mehrere Lichtquellen (53', 53",...) umfasst, die Licht der Wellenlänge oder Wellenlängen erzeugen, für die das Hologramm (51) belichtet ist, und so angeordnet sind, dass die mindestens eine Lichtquelle (53) und die mehreren Lichtquellen (53', 53",...) das Hologramm unter unterschiedlichen Winkeln zeitversetzt beleuchten können.

3. Verifizierungsvorrichtung (50) nach Anspruch 1 oder 2, **dadurch gekennzeichnet**, das die mindestens eine Lichtquelle (53) und die Erfassungseinheit (54) relativ zueinander schwenkbar sind, um die Rekonstruktionsgeometrie variieren zu können.

4. Verifizierungsvorrichtung (50) nach einem der Ansprüche 1 bis 3, **dadurch gekennzeichnet, dass** die Erfassungseinheit (54) die Rekonstruktionen ortsaufgelöst nach Helligkeits- oder Intensitätswerten erfassen kann.

5. Verifizierungsvorrichtung (50) nach einem der Ansprüche 1 bis 4, **dadurch gekennzeichnet, dass** die Auswerteeinheit (56) eine Kontrastumkehr der mindestens zwei Regionen (46, 46', 46", 46"', 47, 47') in unter den mindestens zwei Rekonstruktionsgeometrien aufgenommenen Rekonstruktionen als Verifikationskriterium auswertet.

6. Verfahren zur Verifizierung (50) der Echtheit eines Hologramms (45, 45', 51), wobei das Hologramm ein Hologramm (45, 45', 51) ist, welches unter einem Rekonstruktionseinfallwinkel einfallendes Licht bei einer Rekonstruktion in einen Rekonstruktionsausfallwinkel reflektiert und/oder beugt, und wobei das Hologramm mindestens zwei Regionen (46, 46', 46", 46"', 47, 47') umfasst, die aus unterschiedlich großen Winkelbereichen um den Rekonstruktionseinfallwinkel einfallendes Licht in entsprechende unterschiedlich große Winkelbereiche um den Rekonstruktionsausfallwinkel reflektieren und/oder beugen, und/oder eines Sicherheitsdokuments (52) mit einem solchen Hologramm (45, 45', 51), umfassend die Schritte: Erfassen der Rekonstruktion des Hologramms (45, 45', 51) unter mindestens zwei vorgegebenen Rekonstruktionsgeometrien, die an die Winkelbereiche der Streucharakteristiken der mindestens zwei Regionen (46, 46', 46", 46"', 47, 47') angepasst sind, und Auswerten von Unterschieden der erfassten Rekonstruktionen und Vergleichen der Unterschiede mit vorgegebenen Unterschieden, Treffen einer Verifikationsentscheidung anhand des Vergleichsergebnisses und Ausgeben der Verifikationsentscheidung, **dadurch gekennzeichnet, dass** eine Rekonstruktion des Hologramms (45, 45', 51) unter einer ausgezeichneten Rekonstruktionsgeometrie erfasst wird, unter der die mindestens zwei Regionen (46, 46', 46", 46"', 47, 47') in der Rekonstruktion als gleich hell oder gleich intensiv wahrgenommen werden, und aus dieser Rekonstruktion ein sich zumindest über Teile der beiden Regionen (46, 46', 46", 46"', 47, 47') erstreckendes Individualisierungsmuster des Hologramms extrahiert wird und ein zusätzliches Merkmal des Hologramms (45, 45', 51) oder Sicherheitsdokuments (52) erfasst wird und das Individualisierungsmuster gegen das zusätzliche Merkmal abgeglichen wird.

7. Verfahren nach Anspruch 6, **dadurch gekennzeichnet, dass** das Hologramm (51) zeitversetzt unter unterschiedlichen Winkeln beleuchtet wird, um die Rekonstruktionen unter den mindestens zwei Rekonstruktionsgeometrien aufzunehmen.

8. Verfahren nach Anspruch 6 oder 7, **dadurch gekennzeichnet, dass** die mindestens eine Lichtquelle (53) und die Erfassungseinheit (54) relativ zueinander geschwenkt werden, um die Rekonstruktionen unter den mindestens zwei Rekonstruktionsgeometrien aufzunehmen.

9. Verfahren nach einem der Ansprüche 6 bis 8, **dadurch gekennzeichnet, dass** die Rekonstruktionen ortsaufgelöst nach Helligkeits- oder Intensitätswerten erfasst werden.

10. Verfahren nach einem der Ansprüche 6 bis 9, **dadurch gekennzeichnet, dass** die Auswerteeinheit eine Kontrastumkehr der mindestens zwei Regionen (46, 46', 46", 46"', 47, 47') in unter den mindestens zwei Rekonstruktionsgeometrien aufgenommenen Rekonstruktionen als vorgegebenen Unterschied auswertet.

## Claims

1. Verification device (50) for a hologram (51), wherein the hologram is a hologram (45,45',51) which reflects and/or diffracts light which impinges at a reconstruction impinging angle in a reconstruction in a reconstruction reflecting angle, and wherein the hologram comprises at least two regions (46, 46', 46", 46"', 47, 47') which reflect and/or diffract the light impinging from angle ranges of different sizes about the reconstruction impinging angle into correspondingly different sized angle ranges about the reconstruction reflection angle, and/or a security document (52) with such a hologram (51), comprising at least one light source (53) and a detection unit (54) for the detecting of reconstructions of the hologram (51), wherein the detection unit (54) is configured such as to detect a reconstruction of the hologram in a locally resolved manner, and the verification device (50) is configured such as to detect reconstructions of the hologram (51) under at least two predetermined reconstruction geometries, which are adjusted to the angle ranges of the scatter characteristics of the at least two regions (46, 46', 46", 46"', 47, 47'), and further provided are an evaluation unit (56), which is configured such as to reach a verification decision on the basis of differences in the reconstructions detected, and an output unit (61) for outputting the verification decision,
**characterised in that** the verification device (50) is configured such as to detect a reconstruction of the hologram (51) under a marked-out reconstruction geometry, under which the at least two regions (46, 46', 46", 46''', 47, 47') in the reconstruction are appraised as being equally bright or equally intense, and that the verification device (50) comprises an extraction unit (57), which is configured such as to extract an individualising pattern of the hologram from a reconstruction of the hologram (51) detected under the marked-out reconstruction geometry, which extends over at least parts of the two regions (46, 46', 46", 46"', 47, 47'), and that the verification device (50) comprises a further detection unit (59), coupled to the evaluation unit (56), in order to detect an additional feature of the hologram (51) or of the security document (52), and that the evaluation unit (56) is configured such as to compare the individualising pattern against the additional feature.

2. Verification device (50) according to claim 1, **characterised in that** the verification device (50) additionally comprises a plurality of light sources (53', 53", ...), which produce light of the wave length or wave lengths for which the hologram (51) is exposed, and are arranged in such a manner that the at least one light source (53) and the plurality of light sources (53', 53", ...) of the hologram can be illuminated at different angles in a temporally offset manner.

3. Verification device (50) according to claim 1 or 2, **characterised in that** the at least one light source (53) and the detection unit (54) can be pivoted relative to one another in order to be able to vary the reconstruction geometry.

4. Verification device (50) according to any one of claims 1 to 3, **characterised in that** the detection unit (54) can detect the reconstructions in a locally resolved manner, according to brightness or intensity values.

5. Verification device (50) according to any one of claims 1 to 4, **characterised in that** the evaluation unit (56) evaluates a contrast reversal of the at least two regions (46,46',46",46''',47,47'), in reconstructions which are taken under at least two reconstruction geometries, as a verification criterion.

6. Method for the verification (50) of the authenticity of a hologram (45,45',51), wherein the hologram is a hologram (45,45',51) which reflects and/or diffracts light which impinges at a reconstruction impinging angle in a reconstruction in a reconstruction reflecting angle, and wherein the hologram comprises at least two regions (46, 46', 46", 46"', 47, 47') which reflect and/or diffract the light impinging from angle ranges of different sizes about the reconstruction impinging angle into correspondingly different sized angle ranges about the reconstruction reflection angle, and/or a security document (52) with such a hologram (45,45',51), comprising the steps: Detecting the reconstruction of the hologram (45,45'51) under at least two predetermined reconstruction geometries, which are adjusted to the angle ranges of the scatter characteristics of the at least two regions (46, 46', 46", 46''', 47, 47'), and evaluating of differences of the detected reconstructions, and comparing of the differences with predetermined differences, taking of a verification decision on the basis of the result of the comparison, and outputting of the verification decision, **characterised in that** a reconstruction of the hologram (45,45' 51) is detected under a marked-out reconstruction geometry, under which at least two regions (46, 46', 46", 46''', 47, 47') in the reconstruction are appraised as being equally bright or equally intense, and, from this reconstruction, an individualising pattern of the hologram is extracted, extending over parts of the two regions (46, 46', 46", 46"', 47, 47'), and an additional feature of the hologram (45,45',51) or of the security document (52) is detected, and the individualising pattern is compared against the additional feature.

7. Method according to claim 6, **characterised in that** the hologram (51) is illuminated in a temporally offset manner under different angles, in order for the reconstruction to be appraised under the at least two reconstruction geometries.

8. Method according to claim 6 or 7, **characterised in that** the at least one light source (53) and the detection unit (54) are pivoted in relation to one another, in order for the reconstruction to be appraised under the at least two reconstruction geometries.

9. Method according to any one of claims 6 to 8, **characterised in that** the reconstructions are detected in a locally resolved manner according to brightness or intensity values.

10. Method according to any one of claims 6 to 9, **characterised in that** the evaluation unit evaluates a contrast reversal of the at least two regions (46, 46', 46", 46''', 47, 47') in reconstructions taken up under the at least two reconstruction geometries.

## Revendications

1. Dispositif de vérification (50) pour un hologramme (51), dans lequel l'hologramme est un hologramme (45, 45', 51) réfléchissant et/ou diffractant la lumière incidente sous un angle d'incidence de reconstruction lors d'une reconstruction selon un angle de projection de reconstruction, et dans lequel l'hologramme comprend au moins deux régions (46, 46', 46", 46"', 47, 47'), qui réfléchissent et/ou diffractent la lumière incidente à partir de plages angulaires de différentes tailles de l'angle d'incidence de reconstruction dans des plages angulaires de différentes tailles correspondantes de l'angle de projection de reconstruction, et/ou un document de sécurité (52) avec un tel hologramme (51), comprenant au moins une source de lumière (53) et une unité de détection (54) pour la détection de reconstructions de l'hologramme (51), dans lequel l'unité de détection (54) est réalisée pour détecter de manière spatialement résolue une reconstruction de l'hologramme, et le dispositif de vérification (50) est réalisé pour détecter des reconstructions de l'hologramme (51) sous au moins deux géométries de reconstruction prédéfinies, qui sont adaptées aux plages angulaires des caractéristiques de diffusion des au moins deux régions (46, 46', 46", 46"', 47, 47'), et en outre une unité d'évaluation (56), laquelle est réalisée pour prendre une décision de vérification à l'aide de différences des reconstructions détectées, et une unité d'émission (61), pour émettre la décision de vérification, sont prévues,
**caractérisé en ce que** le dispositif de vérification (50) est réalisé pour détecter une reconstruction de l'hologramme (51) sous une géométrie de reconstruction distinguée, sous laquelle les au moins deux régions (46, 46', 46", 46"', 47, 47') dans la reconstruction sont perçues avec la même luminosité ou la même intensité, et que le dispositif de vérification (50) présente une unité d'extraction (57), laquelle est réalisée pour extraire à partir d'une reconstruction de l'hologramme (51) détectée sous la géométrie de reconstruction distinguée un modèle d'individualisation de l'hologramme s'étendant au moins sur des parties des deux régions (46, 46', 46", 46"', 47, 47'), et que le dispositif de vérification (50) comprend une autre unité de détection (59) couplée avec l'unité d'évaluation (56), laquelle est réalisée pour détecter une caractéristique supplémentaire de l'hologramme (51) ou document de sécurité (52), et que l'unité d'évaluation (56) est réalisée pour comparer le modèle d'individualisation par rapport à la caractéristique supplémentaire.

2. Dispositif de vérification (50) selon la revendication 1, **caractérisé en ce que** le dispositif de vérification (50) comprend en plus plusieurs sources de lumière (53', 53", ...), qui produisent de la lumière de la longueur d'onde ou des longueurs d'ondes pour lesquelles l'hologramme (51) est exposé, et sont agencées de sorte que l'au moins une source de lumière (53) et les plusieurs sources de lumière (53', 53", ...) peuvent éclairer l'hologramme de manière décalée dans le temps sous différents angles.

3. Dispositif de vérification (50) selon la revendication 1 ou 2, **caractérisé en ce que** l'au moins une source de lumière (53) et l'unité de détection (54) peuvent pivoter l'une par rapport à l'autre afin de pouvoir faire varier la géométrie de reconstruction.

4. Dispositif de vérification (50) selon l'une quelconque des revendications 1 à 3, **caractérisé en ce que** l'unité de détection (54) peut détecter les reconstructions spatialement résolues selon les valeurs de luminosité ou d'intensité.

5. Dispositif de vérification (50) selon l'une quelconque des revendications 1 à 4, **caractérisé en ce que** l'unité d'évaluation (56) évalue une inversion de contraste des au moins deux régions (46, 46', 46", 46"', 47, 47') dans des reconstructions enregistrées sous les au moins deux géométries de reconstruction en tant que critère de vérification.

6. Procédé de vérification (50) de l'authenticité d'un hologramme (45, 45', 51),
dans lequel l'hologramme est un hologramme (45, 45', 51), lequel réfléchit et/ou diffracte la lumière incidente sous un angle d'incidence de reconstruction lors d'une reconstruction selon un angle de projection de reconstruction, et dans lequel l'hologramme comprend au moins deux régions (46, 46', 46", 46"', 47, 47'), qui réfléchissent et/ou diffractent la lumière incidente à partir de plages angulaires de différentes tailles de l'angle d'incidence de reconstruction dans des plages angulaires de différentes tailles correspondantes de l'angle de projection de reconstruction, et/ou d'un document de sécurité (52) avec un tel hologramme (45, 45', 51), comprenant les étapes de : détection de la reconstruction de l'hologramme (45, 45', 51) sous au moins deux géométries de reconstruction prédéfinies, qui sont adaptées aux plages angulaires des caractéristiques de diffusion des au moins deux régions (46, 46', 46", 46"', 47, 47'), et évaluation de différences des reconstructions détectées et comparaison des différences avec des différences prédéfinies, prise d'une décision de vérification à l'aide du résultat de comparaison et émission de la décision de vérification,
**caractérisé en ce qu'**une reconstruction de l'hologramme (45, 45', 51) est détectée sous une géométrie de reconstruction distinguée, sous laquelle les au moins deux régions (46, 46', 46", 46"', 47, 47') dans la reconstruction sont perçues avec la même luminosité ou la même intensité, et un modèle d'individualisation de l'hologramme s'étendant au moins sur des parties des deux régions (46, 46', 46", 46"', 47, 47') est extrait de cette reconstruction et une caractéristique supplémentaire de l'hologramme (45, 45', 51) ou document de sécurité (52) est détectée et le modèle d'individualisation est comparé par rapport à la caractéristique supplémentaire.

7. Procédé selon la revendication 6, **caractérisé en ce que** l'hologramme (51) est éclairé de manière décalée dans le temps sous différents angles afin d'enregistrer les reconstructions sous les au moins deux géométries de reconstruction.

8. Procédé selon la revendication 6 ou 7, **caractérisé en ce que** l'au moins une source de lumière (53) et l'unité de détection (54) sont pivotées l'une par rapport à l'autre afin d'enregistrer les reconstructions sous les au moins deux géométries de reconstruction.

9. Procédé selon l'une quelconque des revendications 6 à 8, **caractérisé en ce que** les reconstructions sont détectées de manière spatialement résolue selon les valeurs de luminosité ou d'intensité.

10. Procédé selon l'une quelconque des revendications 6 à 9, **caractérisé en ce que** l'unité d'évaluation évalue une inversion de contraste des au moins deux régions (46, 46', 46", 46"', 47, 47') dans des reconstructions enregistrées sous les au moins deux géométries de reconstruction en tant que différence prédéfinie.
